Europäisches Patentamt

(19) European Patent Office

Office européen des brevets

(11) Publication number. **0 156 581**

A1

(12) # EUROPEAN PATENT APPLICATION

(21) Application number: **85301701.0**

(22) Date of filing: **12.03.85**

(51) Int. Cl.⁴: **F 16 K 1/226**

(30) Priority: **16.03.84 US 590332**

(43) Date of publication of application:
**02.10.85 Bulletin 85/40**

(84) Designated Contracting States:
**DE FR GB IT NL**

(71) Applicant: **KEYSTONE INTERNATIONAL INC.**
**9600 West Gulf Bank Drive**
**Houston Texas 77040(US)**

(72) Inventor: **Holtgraver, Edward G.**
**16203 Chipstead Drive**
**Spring Texas 77373(US)**

(74) Representative: **Allam, Peter Clerk et al,**
**LLOYD WISE, TREGEAR & CO. Norman House 105-109**
**Strand**
**London WC2R 0AE(GB)**

(54) Butterfly valve assembly.

(57) A butterfly valve assembly including first (12) and second (14) body sections defining an annular radially inwardly projecting rib (R), the body sections being secured together to form a tubular valve body, a valve seat (52) positioned in the valve body and including an annular metallic reinforcing member forming (56,58,60) an annular radially outwardly opening channel which engages the rib in the body, the valve seat further including a sealing ring (72,74,76) of resilient material bonded to the metallic reinforcing member, the average radial thickness of the resilient material being at least three times greater than the radial thickness of the reinforcing member, and a valve disk rotatably mounted within the valve seat.

FIG.2

EP 0 156 581 A1

TITLE:    BUTTERFLY VALVE ASSEMBLY

0156581

## Background of the Invention

The present invention relates to butterfly or disc valves and, more specifically, to butterfly valves for use in dead-end service.

Butterfly or disc valves are well known and wisely used for many industrial applications to control fluid flow through conduits, pipes and the like. In the majority of cases, the butterfly valve assembly is generally clamped between adjacent flanges, such as pipe flanges, sealing between the flanges and the valve assembly being accomplished by axial compression of the seat assembly between the flanges resulting in fluid type sealing engagement between the valve assembly and the pipe flanges. However, there are numerous instances in which the butterfly valve assembly must be used in what is known as "dead-end service". In dead-end service, the butterfly valve assembly is not clamped between pipe flanges but rather is at the end of a conduit, pipe or the like, the valve body generally being provided with a means to secure the valve assembly to the pipe flange disposed at the end of the conduit.

It will be appreciated, as well known in the art, that in such dead-end service the valve seat is substantially unsupported against axial movement on the free side of the valve, i.e. the side of the valve which does not abut the pipe flange. Since in such dead-end service the valve may be subjected to pressures in excess of 500 p.s.i., it will be appreciated that unless provision is made to accommodate the line pressure acting on the valve seat, the seat can be axially distorted or twisted permitting leakage out of the conduit. Under severe pressure conditions, the forces acting on the seat may become severe enough to blow the seat out of the valve assembly should the shaft or shafts used to rotatably mount the disk in the valve assembly shear.

U.S. Patents 2,740,423 ('423 Patent) and 2,994,342 ('342 Patent) show butterfly valve assemblies in which a resilient valve seat is provided with a radially outwardly opening channel which receives an annular, radially inwardly projecting rib in the valve body. U.S. Patent 4,025,050 ('050 Patent) shows a valve assembly similar to that shown in the '423 and '342 Patents with the basic exception that the valve seat of the '050 Patent has a layer forming a radially outwardly opening channel, the layer being made of a hard synthetic resin, the channel embracing a radially inward annular projection in the valve body. The valve assemblies of the aforementioned patents are generally not suitable for dead-end service inasmuch as, in the case of the '423 and '342 patents, the resilient seat members, when subjected to high pressures, can be extruded to the downstream side of the disk permitting leakage and possible blowout of the valve. The valve seat of the '050 patent, although including a hard layer of plastic is also subject to pressure deformation and, in any event, in an attempt to prevent such deformation, would require that the layer of hard synthetic resin be quite thick relative to the layer of resilient material in the seat. Additionally, in the case of the '423 and '342 Patents, if the valve is of the wafer type, intended to be inserted between adjacent pipe flanges, there is a tendency for the resilient seat to "roll up" as the wafer valve is inserted between the flanges.

# 0156581

## Summary of the Invention

It is therefore an object of the present invention to provide an improved butterfly valve assembly in which the valve seat has a resilient sealing ring bonded to a metallic reinforcing ring.

Another object of the present invention is to provide an improved butterfly valve assembly in which the valve seat can be mechanically locked to the valve body by means of metal to metal engagement.

A further object of the present invention is to provide an improved valve assembly for use in dead-end service.

The above and other objects of the present invention will become apparent from the drawings, the description given herein, and the appended claims.

The butterfly valve assembly of the present invention is of the split body type comprising a first body section and a second body section and means to secure the body sections together to define a tubular body. The valve body also includes an annular, radially inwardly projecting rib. The valve seat, received in the body, includes an annular metallic reinforcing member having first and second axially spaced annular flange members which are interconnected by an annular web. Each of the flange members has an axially inner and an axially outer surface while the web has a radially inner and a radially outer surface. The radially outer surface of the web and the radially inner surfaces of the flanges define an annular, radially outwardly opening channel which receives the rib of the valve body when the seat is in the valve assembly. The valve seat also includes a sealing ring of resilient material overlaying and bonded to the radially inner surface of the web and the axially outer surfaces of the first and second flanges, the average radial thickness of the resilient material overlying and bonded to the web being at least three times greater than the radial thickness of the web. A valve disk is rotatably mounted within the valve seat. The valve disk has a pheripheral edge which co-acts with the sealing ring to control the flow of fluids through the valve assembly. In a preferred embodiment, the valve body is provided with lugs or other means to secure the valve assembly to a fluid

## Brief Description of the Drawings

Fig. 1 is an elevational view, partly in section, of the valve assembly of the present invention.

Fig. 2 is a longitudinal sectional view taken along the plane of the center of the flow passageway and the axis of the disk valve shaft of the valve assembly in accordance with the present invention.

Fig. 3 is a planar view of the valve seat used in the valve assembly of the present invention.

Fig. 4 is a cross-sectional view of the valve seat taken along the lines 4-4 of Fig. 3.

## Description of the Preferred Embodiment

While the present invention will be described with particular reference to a valve assembly for use in dead-end service, it will be understood that the invention is not so limited. Thus, the valve assembly of the present invention may be made in the form of so-called wafer type valves adapted to be received between adjacent pipe flanges.

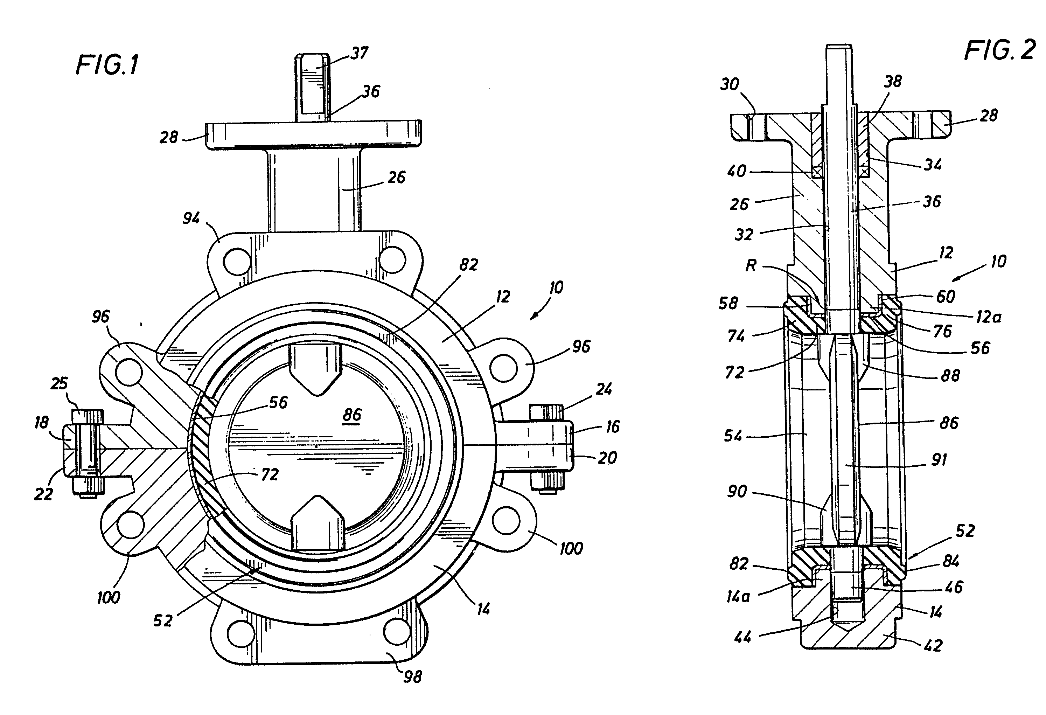

Referring first to Figs. 1 and 2, the valve assembly of the present invention includes a body, shown generally as 10, having a first, upper body section 12 and a second, lower body section 14. Body section 12 is provided with radially outwardly extending ears 16 and 18 while body section 14 is provided with similar radially outwardly extending ears 20 and 22. Body sections 12 and 14 are held together by nut-bolt assemblies 24, 25 received in registering bores in ears 16, 20 and 18, 22, respectively. Body 10 also includes an annular, radially inward extending rib R formed by generally semi-circular rib sections 12a and 14a in body sections 12 and 14, respectively.

Integrally formed with body section 12 is a neck portion 26 having a flange 28 for mounting of an actuator or the like utilizing bolt holes 30 in the well-known manner. Neck 26 and body section 12 are provided with a bore 32 communicating with a counter-bore 34 formed in neck 26. Received in bore 32 is a shaft or stem 36, shaft 36 being rotatably mounted by means of a packing gland 38 and packing 40 and having wrench surfaces 37 for engagement by an actuator or the like.

Body section 14 is provided with a boss 42 which is generally axially aligned with neck 26. Boss 42 is provided with a bore 44 in which is received a stub-shaft 46, sub-shaft 46 and shaft 36 being co-axially aligned with one another.

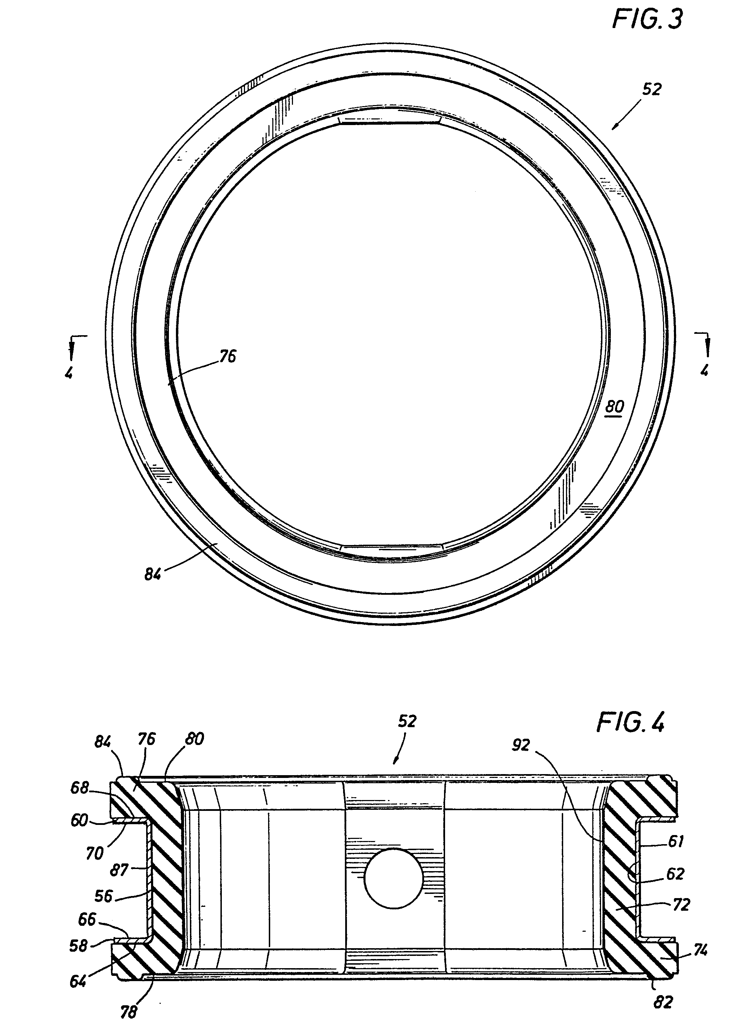

Disposed in valve body 10 is a valve seat shown generally as 52. Valve seat 52 defines a flowway 54 and includes a metallic, annular reinforcing member or ring comprised of a web 56 innerconnecting first and second annular flanges 58 and 60, respectively. With reference to Fig. 4, it can be seen that web 56 includes a radially outward surface 61 and a radially inner surface 62. Flange 58 includes an axially outer surface 64 and an axially inner surface 66 while flange 60 includes an axially outer surface 68 and an axially inner surface 70. Seat 52 further includes a resilient sealing ring including a web portion 72 and flange portions 74 and 76. Web portion 72 overlays and is bonded to surface 62 of web 56 while flange portions 74 and 76 overlay and are bonded to surfaces 64 and 68 of flanges 58 and 60, respectively. Flange portion 74 forms an axial sealing face 78 whereas flange 76 forms an axial sealing face 80. An annular, axially outwardly extending seal ridge 82 is formed on sealing face 78 whereas a similar, annular, axially outwardly extending seal ridge 84 is formed on sealing face 80. Ridges 82 and 84 are disposed closer to the outer pheriphery of valve seat 52 then to the inner pheriphery thereof. Accordingly, and because ridges 82 and 84 have a relatively broad surface, the valve assembly is compatible with all pipe flanges.

Flanges 58 and 60 and web 56 cooperate to form an annular, radially outwardly opening channel 87, which is generally rectangular when viewed in transverse cross section, channel 87 being formed by surfaces 66 and 70 on flanges 58 and 60, respectively, and surface 61 of web 56.

Referring again to Fig. 2, it can be seen that when seat 52 is received in valve body 10 channel 87 receives the annular rib R formed by rib sections 12a and 14a.

Disposed in flowway 54 is a valve disk 86. Valve disk 86 is attached to shaft 36 which is received in a bore in a hub portion 88 of disk 86 and is also attached to stub shaft 46 received in a bore in a hub portion 90 of valve disk 86. Since valve 86 is fixed to shaft 36, rotation of shaft 36 results in rotation of valve disk 86 to open and close flow through the flowway 54. To this end, the pheripheral edge 91 of disk 86 coacts with a sealing surface 92 in valve seat 52.

As previously noted, the valve assembly of the present invention is particularly adaptable for dead-end service wherein the valve assembly is not clamped between adjacent pipe flanges. To this end, body section 12 is provided with lugs 94 and 96 while body section 14 is provided with lugs 98 and 100 which can be used to secure the valve body 10 to a pipe flange in the well known manner. When used in such dead-end service, the valve assembly of the present invention provides distinct advantages over prior art valve assemblies. Since the valve seat 52 is mechanically locked in valve body 10 by virtue of the annular rib R comprised of rib sections 48 and 50 being received, in metal-to-metal engagement, in annular channel 86, valve seat 52 resists any axial distortion occasioned by high pressures and thereby, even in dead-end usage, provides leak proof service.

The unique metallic reinforcing member in seat 52 provides several important advantages. Because the reinforcing member is metallic in construction, it is much stiffer than any comparable reinforcement ring or member made of hard plastic or other such materials. Accordingly, for a desired degree of rigidity, the reinforcement member can be made much thinner than would be the case if it were made from a hard synthetic resin. The thin cross-sectional thickness of the metallic reinforcing member permits a larger cross-sectional thickness of resilient material to be employed in the seat ring without any reduction in the diameter of flow passage 14. Thus, for a given diameter of flow passage, the valve assembly of the present invention utilizing a valve seat having the metallic reinforcement member, can be made more compact, i.e. has a smaller overall O.D., than a valve assembly which would employ a valve seat having a reinforcement member made of hard plastic or similar material.

The valve assembly of the present invention employs a valve seat in which the average radial thickness of the resilient material overlying the web of the reinforcing member is at least three times greater than the radial thickness of the web. Thus, the valve assembly of the present invention provides a valve seat which is highly resilient inasmuch as a relatively large radial thickness of resilient material is provided. This enhanced resiliency results in the need for less disk to seat interference to hold pressure thereby resulting in lower seating and unseating torque as the disk is moved from the open to the closed position and vice versa. Because the resilient material is bonded over the entire axial, outer faces of the flanges and the entire radially inner surface of the web of the metallic reinforcing member, the valve is far less subject to leakage under high pressures since extrusion of the resilient material is minimized. Additionally, large radical thickeners of resilient material, e.g. rubber, gives longer seat life.

Preferably, the metallic reinforcing member is formed by metal spinning of a generally cylindrical blank. The unique manner of forming the metallic reinforcing ring by spinning eliminates localized stresses generally encountered in machining operations.

A feature of the present invention is that the valve assembly avoids certain problems encountered when the valve is to be clamped between adjacent pipe flanges. In many prior art assemblies such as for example those shown in U.S. Patents 2,740,423 and 2,994,342, there is a tendency for the resilient valve seat to roll up when attempts are made to slide the valve, be it of the wafer type or lug type, between close fitting, adjacent pipe flanges. With the valve assembly of the present invention, since the resilient portion of the seat is securely bonded to the metal reinforcing member, such roll-up cannot occur.

The foregoing represents only one preferred embodiment of the invention, and it will be understood that numerous modifications may suggest themselves to those skilled in the art. Accordingly, it is intended that the scope of the present invention be limited only by the claims which follow.

What Is Claimed Is:

1.  A butterfly valve assembly comprising:

a valve body having first and second body sections, the valve body further including an annular radially inwardly projecting rib;

means for securing said first and second body sections together;

a valve seat comprising an annular metallic reinforcing member, said reinforcing member having first and second axially spaced annular flange members interconnected by an annular web, each of said flange members having an axially inner and an axially outer surface, said web having a radially inner and a radially outer surface, said flanges and said web defining an annular, radially outwardly opening channel for receiving said annular rib, said valve seat further comprising a sealing ring of resilient material overlaying and bonded to the radially inner surface of said web and the axially outer surfaces of said first and second flanges, the average radial thickness of said resilient material overlying and bonded to said web being at least three times greater than the radial thickness of said web; and

a valve disk rotatably mounted within said valve seat, said valve disk having a peripheral edge coacting with said sealing ring to control the flow of fluids through said valve assembly.

2.  The valve assembly of Claim 1 wherein said sealing ring of resilient material defines a first sealing face and a second sealing face, said first sealing face being axially spaced from said first flange, said second sealing face being axially spaced from said second flange, said first and second sealing faces including annular, axially outwardly extending ridges.

3.  The valve assembly of Claim 2 wherein said ridges are disposed closer to the outer periphery of said valve seat then to the inner periphery of said valve seat.  -

4. The valve assembly of Claim 1 wherein said channel has a shape complimentary to the shape of said annular rib.

5. The valve assembly of Claim 4 wherein said channel is generally rectangular when viewed in transverse cross section.

6. The valve assembly of Claim 1 including means for attaching said valve assembly to a fluid flow conduit.

7. The valve assembly of Claim 6 wherein said means for attaching said valve assembly includes radially outwardly extending lugs integrally formed on said valve body.

8. The valve assembly of Claim 1 wherein said reinforcing member is formed by spinning.

FIG.2

FIG.1

0156581

*FIG.3*

52

76

80

84

4

4

*FIG.4*

52

84 76 80

92

68

60

70

87

56

66

58

64

78

61

62

72

74

82

European Patent
Office

## DOCUMENTS CONSIDERED TO BE RELEVANT

| Category | Citation of document with indication where appropriate, of relevant passages | Relevant to claim | CLASSIFICATION OF THE APPLICATION (Int Cl 4) |
|---|---|---|---|
| D,Y | US-A-4 025 050 (TOMOE TECHNICAL RESEARCH CO.) * Claim 1 * | 1 | F 16 K 1/226 |
| Y | NL-C- 134 250 (L.J.G.LINDEBOOM) * Column 2, lines 20-30; figure 3 * | 1 | |
| A | EP-A-0 010 357 (GENERAL SIGNAL CORP.) | | |
| A | DE-A-3 203 374 (MARK CONTROLS CORP.) | | |

**TECHNICAL FIELDS SEARCHED (Int Cl 4)**

F 16 K 1/00

The present search report has been drawn up for all claims

| Place of search | Date of completion of the search | Examiner |
|---|---|---|
| THE HAGUE | 24-06-1985 | DE SMET F.P. |